# EUROPEAN PATENT SPECIFICATION

(11) **EP 3 325 908 B1**
(45) Date of publication and mention of the grant of the patent: **01.05.2019**
(21) Application number: 16757722.0
(22) Date of filing: 20.07.2016
(51) Int. Cl.: F24S 60/00, F28D 20/00, F24D 3/08

(54) **HEAT STORAGE DEVICE**
WÄRMESPEICHERVORRICHTUNG
DISPOSITIF D'ACCUMULATION DE CHALEUR

(30) Priority: 23.07.2015 EP 15178044
(43) Date of publication of application: 30.05.2018
(73) Proprietor: Steno S.r.l., 37134 Verona (IT)
(72) Inventor: MENEGAZZI, Mirko, Legnago (VR) (IT)
(74) Representative: Laghi, Alberto
(86) International application number: PCT/IB2016/054303
(87) International publication number: WO 2017/013588

(56) References cited:
- EP-A1- 1 028 293
- AU-B2- 559 939
- DE-U1- 29 701 273

## Description

The present invention relates to a heat storage device.

In particular, the present invention is advantageously applied in the sector of the solar thermal panel units for the conversion of solar radiation into thermal energy for use in the production of hot water, in the space heating, in the solar cooling etc., to which the following description will make explicit reference without thereby losing generality.

In general, to realize an Integral Collector Storage (ICS) solar system, or a solar collector with integrated tank for hot water, it is necessary to build a storage vessel, made from steel or other suitable material, and with a sufficient capacity, having an elongated shape and with a wall relatively thin to facilitate heat exchanges, and able to withstand the possible thermal and mechanical stresses.

Traditionally, the more widespread technique for realizing a accumulator comprises forming a hollow tubular element of steel (calendered or extruded) whose ends are closed by steel end plates welded to form planar or domed surfaces so as to form a storage tank, in turn provided with zones for the connection to a water supply circuit.

However, this solution suffers from structural weaknesses due to the end welds, which are areas of easy priming of corrosive phenomena and areas of concentration of stresses due to thermal expansions.

In order to overcome this structural weakness, it is known the use of more efficient end closures made via mechanical couplings, able to allow minimum beddings, simplify the construction, and have a greater control on the single longitudinal weld needed for the realization of the tube (thus less risk of corrosion).

Currently, there are two types of mechanical coupling, the first of which is based on the use of an U-shaped dowel that is inserted in suitable holes provided on the steel tubular element and passing through the suitably shaped grooves on the end closures.

On the other hand, the second type relates to a variant of the anti-unthreading quick joint for cast iron pipes, known and used in aqueducts, where the steel pipe is socketed so as to create a recess, and once inserted the end closure, an elastic ring is inserted that, by means of the thrust of the closing, expands to lock within the aforementioned recess.

From the practical point of view, the first type allows easy assembly and disassembly operations, but suffers from a distribution of concentrated stresses in a few points and therefore a low resistance to pressure, while the second type allows to satisfactorily distribute the pressure stresses, but it turns out to be difficult and complicated in relation to assembly and, especially, disassembly operations. *Heat storage devices are moreover known on* DE 29701273*,* EP 1028293 *and* AU 559939*.*

The object of the present invention is therefore to overcome the drawbacks of the prior art above mentioned. In particular, the object of the present invention is to provide a heat storage device that has a simple and safe construction, and with an easy and quick maintenance.

Another object of the present invention is to provide an storage device with an optimal distribution of stresses between the tubular element and the respective closed ends, making the most of the advantages offered by the symmetry and homogeneity of section.

The structural and functional characteristics of the present invention and its advantages over the known art will be clearer and more evident from the claims below, and in particular from an examination of the description that follows, made with reference to the attached schematic drawings, and relative to a preferred but not-limiting embodiment of a heat storage device, in which:
- Figure 1 is a perspective view of the collector device of the invention according to a preferred but non-limiting embodiment;
- Figure 2 shows a partially sectional view of the device of Figure 1 with some parts removed for clarity, and also with a constructive element in detail;
- Figure 3 shows a front sectional view of the unit of Figure 2, empathizing also an enlarged-scale portion; and
- Figures 4a and 4b show two views, i.e., a plan and a front views, respectively, of the heat collector device according to the present invention.

With reference to the attached figures, D refers globally to a heat storage device adapted to be used in solar thermal panel units (known per se and therefore not illustrated) for the conversion of solar radiation intothermal energy and for use in the production of hot water, in the space heating, in the solar cooling etc.

The device D comprises a substantially cylindrical hollow tubular element 1, shaped as a "glass", made of steel or equivalent material (for example AISI 444), which is adapted to be closed, at each of two opposite ends 2 (for simplicity only one end 2 ends being illustrated in the accompanying figures), by a closing cover 3, inserted inside the tubular element 1 itself and made of plastic or equivalent material, so as to form, with the tubular element 1, a water storage tank SA for the above solar panel units.

The hydraulic seal of the coupling between the element 1 and the cover 3 is also guaranteed through the use of seal means of the O-ring type (known per se and therefore not illustrated) interposed between the element 1 and the cover 3.

The cover 3 is further provided, on its external upper part 4, with a plurality of fins 5 and 6 variously connected to a cylindrical central portion 7 of the cover 3 itself so as to define an area K of mechanical deformation of the cover 3 itself such that it help to increase the compression of the coupling seal of the mentioned gasket means interposed between the tubular element 1 and the cover 3.

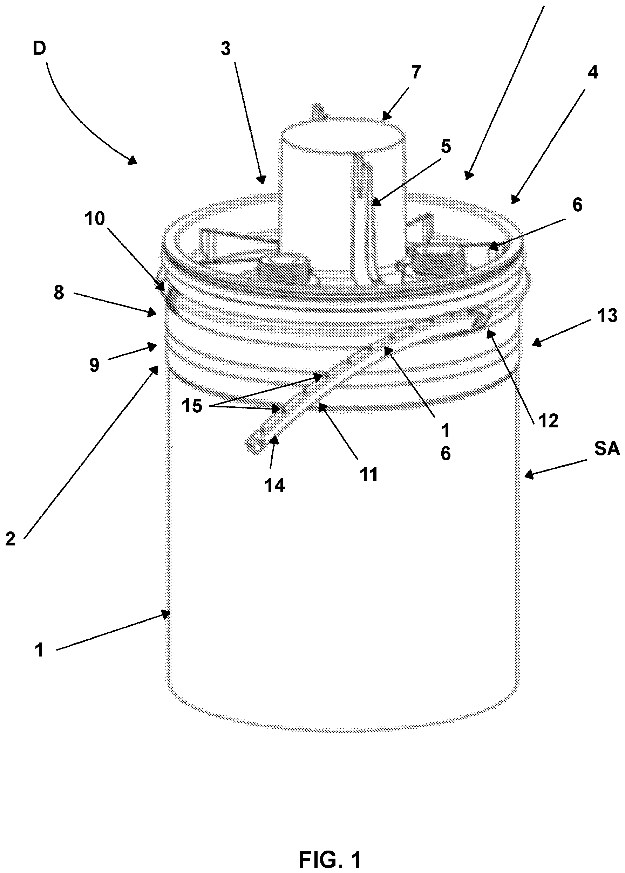

As shown more clearly in Figures 1 to 3, on a portion 8 of the outer side peripheral surface 9 of the cover 3, at least one open seat or groove 10 is formed, having a substantially V or at least triangular cross-section, in which, in use, at least a "clogging" closing element 11 is adapted to be housed.

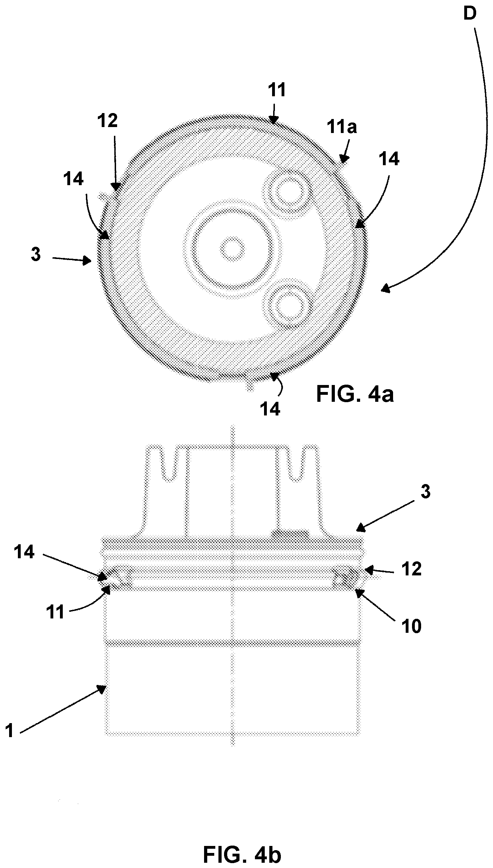

As well illustrated in Figure 4a, the aforementioned groove 10 is adapted to accommodate in succession, along the peripheral surface 9 of the cover 3, preferably three locking elements 11, each of which is provided with a grip end 11a.

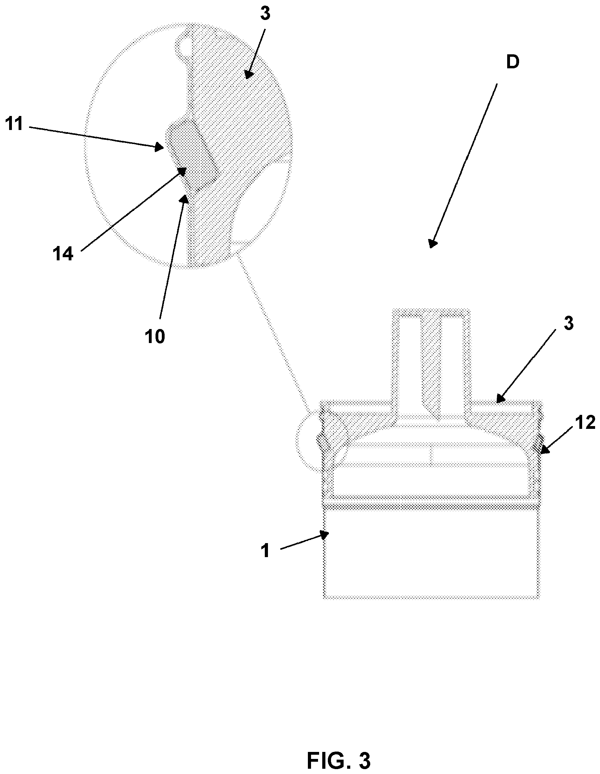

In use, with the cover 3 inserted into each respective end 2 of the tubular element 1 to close the element 1 itself, each element 11 is inserted into the groove 10 of the cover 3, through a respective opening hole 12 of a series of holes equally distributed on the outer peripheral surface 13 of the tubular element 1 itself (preferably, there are three holes at 120° from one another on the surface 13 of the element 1, as shown in Figure 4a), so as to be partially outside the groove 10 itself (see the enlarged detail of Figure 3), achieving therefore an effective and optimum blocked closing through the mechanical coupling of the cover 3 with each end of the tubular element 1.

The hydraulic seal of the coupling is also guaranteed through the use of seal means of the O-ring type (known per se and therefore not illustrated).

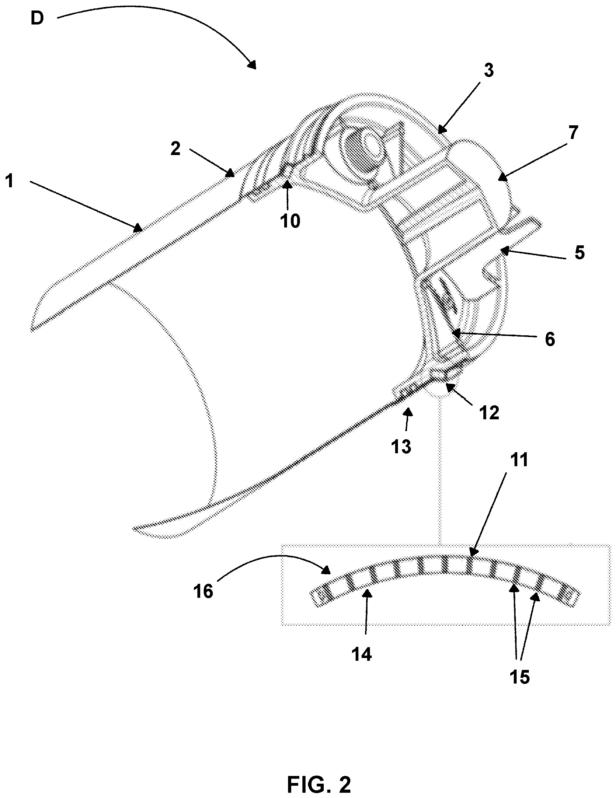

Specifically, each clogging element 11 includes an elongated curved strip 14 with a substantially rectangular cross-section, made of plastic or equivalent material and provided with a plurality of notches 15 (Figures 1 and 2) to form, on the strip 14 itself, a plurality of segments 16, and in such a way as to ensure the necessary flexibility for an easy manual insertion of the element 11 itself, substantially in an inclined position (Figures 3 and 4b) through the aforementioned holes 12 on the tubular element 1, within the groove 10 on the cover 3 and the sufficient strength to counteract the stresses due to the existing pressure inside the device D during its use as a heat accumulator.

The simple unthreading of the strips 14 from the groove 10, during the maintenance/replacement of the device D thus formed, determines the advantageous and rapid decoupling of the cover 3 from the end of the tubular element 1.

Preferably but without limitation, both the cover 3 and the strips 14 are made of *Noryl*®, i.e., a plastic material belonging to the family of PPOs and which has a very high softening temperature, *Vicat*, and that is also suitable for a contact with liquids for civil and food use.

Therefore, with the device D described above, a very homogeneous distribution of the stress on the entire circumference of the tubular element 1 is possible, avoiding harmful points of concentration of stresses.

This also allows the use of a much smaller sections of said tubular element 1.

## Claims

1. Heat storage device (D), comprising a hollow tubular element (1) closed at its opposing ends (2) by closing means (3,11) attached by mechanical coupling; wherein said closing means (3,11) comprise cover means (3) adapted to be inserted inside said tubular element (1) at said ends (2); the peripheral surface (13) of said tubular element (1) being provided with at least one hole (12) and said cover means (3) being provided on their lateral outside with at least one groove (10), inside of which, through said hole (12) on said tubular element (1), at least a corresponding locking element (11) is adapted to be inserted partially outside of said groove (10).

2. Device according to claim 1, **characterized in that** said locking element (11) comprises a segmented (16) strip (14) defined by a plurality of notches (15).

3. Device according to claim 1 or 2, **characterized in that** said locking element (11) has a substantially rectangular cross-section and that said groove (10) has a substantially triangular cross-section.

4. Device according to one or more of the preceding claims 1 to 3, **characterized in that** said locking element (11) is provided with a grip end (11a).

5. Device according to one or more of the preceding claims 1 to 4, **characterized in that** said cover means (3) are externally provided with absorption fins (5,6).

6. Device according to one or more of the preceding claims 1 to 5, **characterized in that** said cover means (3) and said locking element (11) are made of plastic material or equivalent material.

7. Solar panel unit for the conversion of solar radiation into thermal energy, provided with at least one heat storage device according to one or more of claims 1 to 6.

## Patentansprüche

1. Wärmespeichervorrichtung (D), umfassend ein hohles röhrenförmiges Element (1), das an seinen gegenüberliegenden Enden (2) durch mittels mechanischer Kopplung befestigter Schließmittel (3, 11) geschlossen ist; wobei die genannten Schließmittel (3, 11) Abdeckmittel (3) umfassen, die geeignet sind, in das genannte röhrenförmige Element (1) bei seinen Enden (2) eingeführt zu werden; wobei die genannte Umfangsfläche (13) des genannten röhrenförmigen Elements (1) ist mit mindestens einem Loch (12) versehen, und die genannten Abdeckmittel (3) sind an ihrer Außenseite mit mindestens einer Nut (10) versehen, innerhalb der mindestens ein entsprechendes Verriegelungselement (11) durch das genannte Loch (12) an dem röhrenförmigen Element (1) angepasst ist um teilweise außerhalb der genannten Nut (10) eingesetzt zu werden.

2. Wärmespeichervorrichtung nach Anspruch 1, **dadurch gekennzeichnet, dass** das genannte Verriegelungselement (11) einen segmentierten (16) Streifen (14) aufweist, der durch eine Vielzahl von Kerben (15) definiert ist.

3. Wärmespeichervorrichtung nach Anspruch 1 oder 2, **dadurch gekennzeichnet, dass** das genannte Verriegelungselement (11) einen im Wesentlichen rechteckigen Querschnitt aufweist, und dass die genannte Nut (10) einen im Wesentlichen dreieckigen Querschnitt aufweist.

4. Vorrichtung nach einem oder mehreren der vorhergehenden Ansprüche 1 bis 3, **dadurch gekennzeichnet, dass** das genannte Verriegelungselement (11) mit einem Greifende (11a) versehen ist.

5. Vorrichtung nach einem oder mehreren der vorhergehenden Ansprüche 1 bis 4, **dadurch gekennzeichnet, dass** die genannten Abdeckmittel (3) außen mit Absorptionslamellen (5, 6) versehen sind.

6. Vorrichtung nach einem oder mehreren der vorhergehenden Ansprüche 1 bis 5, **dadurch gekennzeichnet, dass** die genannten Abdeckmittel (3) und das genannte Verriegelungselement (11) aus Kunststoffmaterial oder einem äquivalenten Material gebildet sind.

7. Sonnenkollektoreinheit zur Umwandlung von Sonnenstrahlung in Wärmeenergie, versehen mit mindestens einem Wärmespeicher nach einem oder mehreren der Ansprüche 1 bis 6.

## Revendications

1. Dispositif d'accumulation de chaleur (D) comprenant un élément tubulaire creux (1) fermé à ses extrémités opposées (2) par de moyens de fermeture (3, 11) fixés par couplage mécanique; dans lequel lesdits moyens de fermeture (3, 11) comprennent des moyens de couverture (3) aptes à être insérés à l'intérieur dudit élément tubulaire (1) dans lesdites extrémités (2); la surface périphérique (13) dudit élément tubulaire (1) étant munie d'au moins un trou (12) et lesdits moyens de couvrement (3) étant pourvus sur leur côté extérieur d'au moins une rainure (10) à l'intérieur de laquelle par ledit trou (12) sur ledit élément tubulaire (1) au moins un correspondant élément de verrouillage (11) est adapté pour être inséré partiellement à l'extérieur de ladite rainure (10).

2. Dispositif selon la revendication 1, **caractérisé en ce que** ledit élément de verrouillage (11) comprend une bande (14) segmentée (16) définie par une pluralité d'encoches (15).

3. Dispositif selon la revendication 1 ou 2, **caractérisé en ce que** ledit élément de verrouillage (11) a une section transversale sensiblement rectangulaire, et la dite rainure (10) a une section transversale sensiblement triangulaire.

4. Dispositif selon l'une ou plusieurs des revendications précédentes 1 à 3, **caractérisé en ce que** ledit élément de blocage (11) est pourvu d'une extrémité de préhension (11a).

5. Dispositif selon une ou plusieurs des revendications précédentes 1 à 4, **caractérisé en ce que** lesdits moyens de recouvrement (3) sont pourvus extérieurement de pattes d'absorption (5, 6).

6. Dispositif selon une ou plusieurs des revendications précédentes 1 à 5, **caractérisé en ce que** ledit moyen de recouvrement (3) et ledit élément de blocage (11) sont formés d'un matériau plastique ou d'un matériau équivalent.

7. Unité de panneau solaire pour la conversion du rayonnement solaire en énergie thermique, munie d'au moins un dispositif de stockage de chaleur selon l'une ou plusieurs des revendications 1 à 6.
